Europäisches Patentamt

European Patent Office

Office européen des brevets

(11) Numéro de publication: **0 189 703**
**B1**

(12) **FASCICULE DE BREVET EUROPEEN**

(45) Date de publication du fascicule du brevet: **29.08.90**

(21) Numéro de dépôt: **85402584.8**

(22) Date de dépôt: **20.12.85**

(51) Int. Cl.⁵: **H 04 N 7/133**

(54) **Procédé adaptatif de codage et de décodage d'une suite d'images par transformation, et dispositifs pour la mise en oeuvre de ce procédé.**

(30) Priorité: **21.12.84 FR 8419646**

(43) Date de publication de la demande:
**06.08.86 Bulletin 86/32**

(45) Mention de la délivrance du brevet:
**29.08.90 Bulletin 90/35**

(84) Etats contractants désignés:
**CH DE GB IT LI NL SE**

(56) Documents cités:
**EP-A-0 084 270**
**EP-A-0 123 456**
**DE-A-3 029 190**
**US-A-3 761 613**
**US-A-4 217 609**
**US-A-4 245 248**
**US-A-4 394 774**

**THE BELL SYSTEM TECHNICAL JOURNAL, vol. 58, no. 7, septembre 1979, pages 1703-1717, American Telephone and Telegraph Company, New York, US; A.N. NETRAVALI et al.: "Motion-compensated transform coding"**

(73) Titulaire: **THOMSON GRAND PUBLIC**
**74, rue du Surmelin**
**F-75020 Paris (FR)**

(72) Inventeur: **Ferre, Alain**
**THOMSON-CSF SCPI 173, bld Haussmann**
**F-75379 Paris Cedex 08 (FR)**
Inventeur: **Villalon, Yannick**
**THOMSON-CSF SCPI 173, bld Haussmann**
**F-75379 Paris Cedex 08 (FR)**

(74) Mandataire: **Turlèque, Clotilde et al**
**THOMSON-CSF SCPI**
**F-92045 PARIS LA DEFENSE CEDEX 67 (FR)**

(56) References cited:
**ICC 81 INTERNATIONAL CONFERENCE ON COMMUNICATIONS, Denver, Colorado, Conference Record, vol. 2 de 4, 14-18 juin 1981, pages 22.5.1 - 22.5.6, IEE, New York, US; W-H. CHEN: "Scene adaptive coder"**

Courier Press, Leamington Spa, England.

# EP 0 189 703 B1

**Description**

L'invention concerne un procédé adaptatif de codage et de décodage d'une suite d'images par transformation, et un dispositif pour la mise en oeuvre de ce procédé. Un tel procédé a pour but de réduire la quantité d'informations à transmettre, ou à stocker, lorsque des images vidéo opt été numérisées.

Il est connu de réaliser un codage et un décodage d'une image vidéo en mettant en oeuvre une transformation bidirectionnelle du type cosinus, Fourier, Hadamard, Haar, ou Karhunen-Loeuve. Le codage consiste à: diviser chaque image en blocs carrés; appliquer la transformation à chaque bloc pour obtenir une matrice de valeurs appelées coefficients de transformation du bloc; et à transmettre ces coefficients sous une forme codée. Le décodage consiste à décoder les coefficients puis à restituer les valeurs numériques représentatives de chaque point d'un bloc en appliquant la transformation inverse à la matrice des coefficients de transformation de ce bloc. Les transformations utilisées en pratique sont des transformations pour lesquelles il existe des algorithmes rapides, par exemple les transformations de Fourier, d'Hadamard, de Haar, et la transformation cosinus.

L'article IEEE "Transaction on Communications" vol. COM-32, no 3, mars 1984, décrit un procédé de codage adaptatif consistant à quantifier les coefficients de transformation d'une manière adaptative telle que les blocs de coefficients contenant beaucoup d'énergie sont quantifiées avec un plus grand nombre de niveaux de quantification et un plus grand nombre de bits de codes que les blocs contenant peu d'énergie. L'image est divisée en 16×16 blocs. Les valeurs numériques représentatives des points de chaque bloc sont transformées par la transformation cosinus puis les coefficients de transformation ainsi obtenus sont comparés à un seuil. Les coefficients supérieures à ce seuil sont normalisés en les multipliant par un paramètre fourni par un dispositif de régulation du débit de transmission.

Les coefficients ainsi normalisés sont ensuite quantifiés puis codés par un code de Huffman, et sont stockés dans une mémoire tampon régulant le débit de la transmission. Cette mémoire tampon stocke à un rythme variable les informations à transmettre, rythme qui dépend de l'énergie instantanée de l'image, et elle restitue ces informations avec un débit constant. Le degré de remplissage de cette mémoire tampon et le débit à son entrée sont surveillés et déterminent la valeur du paramètre de normalisation.

Après la transmission les informations arrivent avec un débit constant dans une mémoire tampon qui les restitue avec un débit variable à un décodeur de Huffman. Les coefficients de transformation sont alors normalisés par un paramètre de normalisation inverse de celui utilisé pour le codage, ce paramètre inverse étant calculé par un dispositif de régulation de débit qui surveille de degré de remplissage de la mémoire tampon. Les coefficients de transformation sont alors additionnés à la valeur de seuil utilisé pour le codage et sont transformés par la transformation inverse de la transformation cosinus pour restituer les valeurs numériques représentatives des points d'un bloc.

La qualité des images restituées est très bonne, comparativement aux autres méthodes connues, à condition que les images correspondent à des scènes très animées. La qualité visuelle des images restituées est nettement moins bonne lorsqu'elles représentent des scènes faiblement animées ou complètement fixes. Dans ce dernier cas, deux défauts apparaissent: on voit qu'il y a un filtrage des hautes et moyennes fréquences spatiales, ce filtrage correspondant à l'élimination des coefficients de faible énergie qui ont une valeur inférieure au seuil; et on voit des démarcations entre les blocs dans les zones uniformes des images, car l'oeil est sensible aux faibles différences de luminosité dans les zones uniformes.

On connaît des procédés exploitant en outre la corrélation existant entre les coefficients de transformations de deux images successives. Cette corrélation est particulièrement élevée lorsque les images représentent une scène peu animée. La demande de brevet EP—A—123456 décrit un tel procédé, consistant à transmettre les coefficients de transformation lorsque la scène est très animée, et à transmettre les valeurs de la différence entre un coefficient de transformation et une prédiction, lorsque la scène est peu animée. La prédiction est égale au produit d'un coefficient homologue pour l'image précédente, et d'un coefficient de prédiction, K, compris entre 0 et 1. Ce coefficient K est variable en fonction du rang du coefficient à coder et en fonction de la corrélation existant entre les coefficients de transformation des deux images successives, c'est-à-dire en fonction de l'animation de la scène. Ainsi, le codage peut passer progressivement du type intra-image au type inter-images, selon le degré d'animation des images. Les scènes fixes et les scènes animées peuvent être restituées avec une bonne qualité.

Le but de l'invention est de proposer un procédé permettant d'améliorer encore le taux de compression des informations, sans dégrader la qualité des images restituées.

L'objet de l'invention est un procédé consistant notamment à pondérer les coefficients ou les différences de coefficients en favorisant les basses fréquences spatiales par rapport aux hautes fréquences spatiales.

Selon une autre caractéristique, il consiste en outre à normaliser les coefficients, et les différences de coefficients en les multipliant par un facteur variable en fonction de la quantité d'information occupant la mémoire tampon.

Selon l'invention, un procédé adaptatif de codage et de décodage d'une suite d'images par transformation, chaque point d'image étant représenté par un valeur numérique, le codage consistant à diviser chaque image en blocs de points et à appliquer une transformation bidimentionelle à chaque bloc pour obtenir un matrice de valeurs appelées coefficients de transformation du bloc; et consistant, pour

2

chaque bloc de points à:

discriminer si le bloc représente une scène très animée ou peu animée;

transmettre la valeur des coefficients de transformation du bloc dans le premier cas, ou la différence de valeur de ces coefficients, par rapport à la valeur des coefficients homologues du bloc homologue dans l'image précédente, dans le second cas;

transmettre des informations indiquant si le bloc représente une scène peu animée ou très animée;

le décodage consistant à appliquer aux valeurs transmises correspondant à un bloc, une transformation inverse de la transformation appliqué pour son codage si ce bloc représente un scène très animée;

et consistant en outre, si le bloc représente une scène peu animée, à déterminer une valeur des coefficients de ce bloc, en additionnant à la différence de valeur de chacun de ses coefficients respectivement à la valeur des coefficients homologues du bloc homologue dans l'image précédente, avant d'appliquer la transformation inverse;

est caractérisé en ce que le codage consiste en outre à appliquer une pondération aux valeurs des coefficients et des différences de coefficients, avant de les transmettre, avec un poids plus grand pour les coefficients et les différences de coefficients correspondant aux basses fréquences spatiales de l'image, par rapport à ceux et celles correspondant aux hautes fréquences spatiales;

et en ce que le décodage consiste en outre à appliquer une pondération inverse de celle du codage aux valeurs des coefficients et des différences avant de leur appliquer la transformation inverse.

L'invention sera mieux comprise et d'autres détails apparaîtront à l'aide de la description ci-dessous et des figures l'accompagnant:

la figure 1 représente le schéma synoptique d'un exemple de réalisation d'un système de codage et de décodage mettant en oeuvre le procédé connue décrit précédemment;

les figures 2 à 5 représentent des graphes illustrant le procédé selon l'invention;

la figure 6 représente le schéma synoptique d'un exemple de réalisation d'un dispositif de codage selon l'invention;

la figure 7 représente le schéma synoptique d'un exemple de réalisation d'un dispositif de décodage selon l'invention.

Dans un exemple de réalisation le procédé selon l'invention met en oeuvre la transformation cosinus. Lorsque cell-ci est appliquée à une suite de valeurs numériques f(j,k) représentatives des points d'une image, pour j et k variant de 0 à N−1 et désignant la ligne et la colonne contenant le point, les coefficients de transformation obtenus sont:

$$F(u,v) = \frac{4C(u) \cdot C(v)}{N^2} \sum_{j=o}^{N-1} \sum_{k=o}^{N-1} f(j,k) \cdot \cos \frac{(2j+1)u\pi}{2N} \cdot \cos \frac{(2k+1)v\pi}{2N} \quad (1)$$

pour u, v=0, 1,..., N−1, et désignant respectivement une ligne et une colonne de la matrice des coefficients de transformation, et où:

$$C(w) = \frac{1}{\sqrt{2}} \text{pour } w=0$$

$C(w)=1$ pour $w=1, 2,..., N-1$

La transformation cosinus inverse est définie par:

$$f(j,k) = \sum_{u=o}^{N-1} \sum_{v=o}^{N-1} C(u) \cdot C(v) \cdot F(u,v) \cdot \cos \frac{(2j+1)u\pi}{2N} \cdot \cos \frac{(2k+1)v\pi}{2N} \quad (2)$$

pour u, v=0, 1,..., N−1

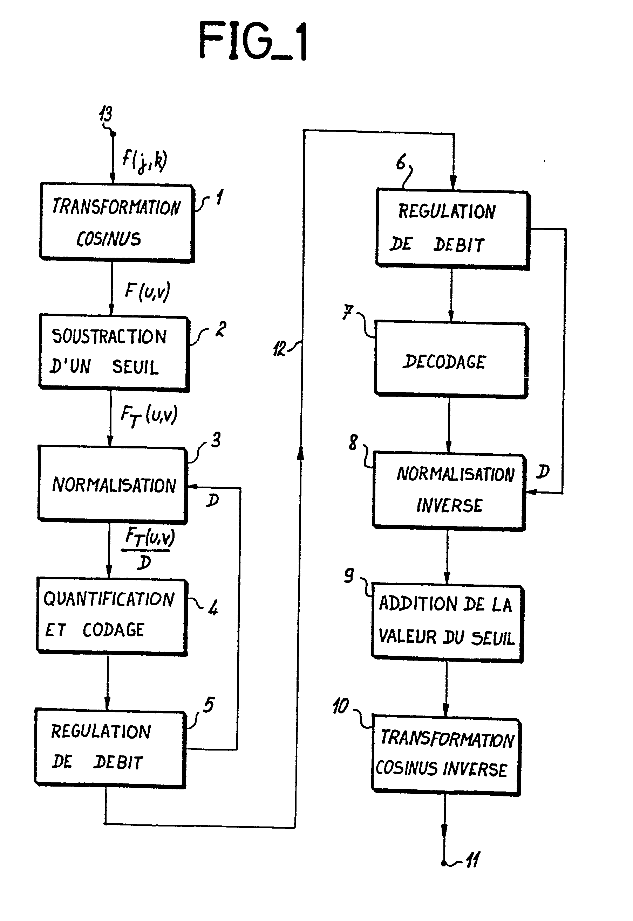

La figure 1 représente la schéma synoptique d'un système de codage et de décodage mettant en oeuvre le procédé décrit dans le document cité précédemment. Les images traitées sont des images vidéo monochromes constituées de deux trames entrelacées, chaque trame étant traitée comme une image indépendante. Cet exemple de réalisation comporte: un dispositif 1 de transformation cosinus; un dispositif 2 de soustraction d'un seuil; un dispositif 3 de normalisation; un dispositif 4 de quantification et de codage; un premier dispositif 4 de régulation de débit; un second dispositif 6 de régulation de débit; un dispositif de décodage 7; un dispositif 8 de normalisation inverse; un dispositif 9 d'addition de la valeur du seuil; et un dispositif 10 de transformation cosinus inverse.

Le dispositif 1 reçoit une suite de valeurs f(j,k) représentant la luminance des points d'une trame, par une borne d'entrée 13, et restitue une suite de valeurs F(u,v) qui sont les coefficients de transformation successivement pour chaque bloc constituant chaque trame. Les valeurs F(u,v) sont appliquées à une entrée du dispositif 2 qui calcule la différence entre cette valeur et une valeur de seuil fixe T. Il restitue une valeur $F_T(u,v)$ telle que:

3

# EP 0 189 703 B1

$$F_T(u,v)=F(u,v)-T \text{ si } F(u,v) \geqslant T$$

$$F_T(u,v)=0 \text{ si } F(u,v) < T \tag{3}$$

La soustraction de ce seuil a pour effet de ramener la plupart des coefficients à la valeur zéro et ainsi limite le nombre de coefficients à quantifier et donc la quantité d'informations à transmettre.

La valeur $F_T(u,v)$ est appliquée à une entrée du dispositif de normalisation 3 qui reçoit sur une autre entrée une valeur 1/D appelée paramètre de normalisation. Le dispositif 3 posséde une sortie fournissant la valeur normalisée

$$\frac{F_T(u,v)}{D}.$$

La normalisation réalisée ainsi par le dispositif 3 permet d'ajuster la gamme de valeurs des coefficients pour pouvoir utiliser au mieux le nombre de bits fixés pour le codage ultérieur.

La valeur normalisée de chaque coefficient de transformation este appliquée à une entrée du dispositif 4 de quantification et de codage. La quantification consiste simplement à convertir une valeur exprimée avec une virgule flottante en une valeur entière. Ainsi un certain nombre de valeurs comprises entre 0 et 1 sont remplacées par la valeur 0, ce qui diminue le nombre de coefficients significatifs à transmettre.

Le coefficient $F(0,0)$ qui correspondant au premier coefficient de la première ligne de la matrice des coefficients de transformation d'un bloc, est codé d'une manière particulière pour éviter que les différences de luminance d'un bloc à l'autre soient perçues par l'oeil. Ce coefficient est quantifié linéairement puis est codé par un code à neuf bits. Les autres coefficients non nuls sont codés, en ce qui concerne leur valeur et leur adresse dans la matrice, en lisant respectivement dans deux tables des valeurs codées selon un code de Huffman.

Les valeurs codées d'un tel code ont une longueur variable mais sont choisies de telle façon qu'elles sont identifiables sand nécessiter d'informations de séparation. En outre, les valeurs codées de longueurs les plus courtes sont attribuées aux coefficients, respectivement aux adresses, apparaissant le plus fréquemment lorsqu'une étude statistique des coefficients de transformations est effectuée.

L'adresse de chaque coefficient n'est pas codée par l'indice de sa ligne et l'indice de sa colonne dans la matrice du bloc mais par un codage par plages consistant à prendre comme adresse la longueur d'une plage où les coefficients ont une même valeur, la matrice des coefficients étant parcourue selon un ordre bien déterminé.

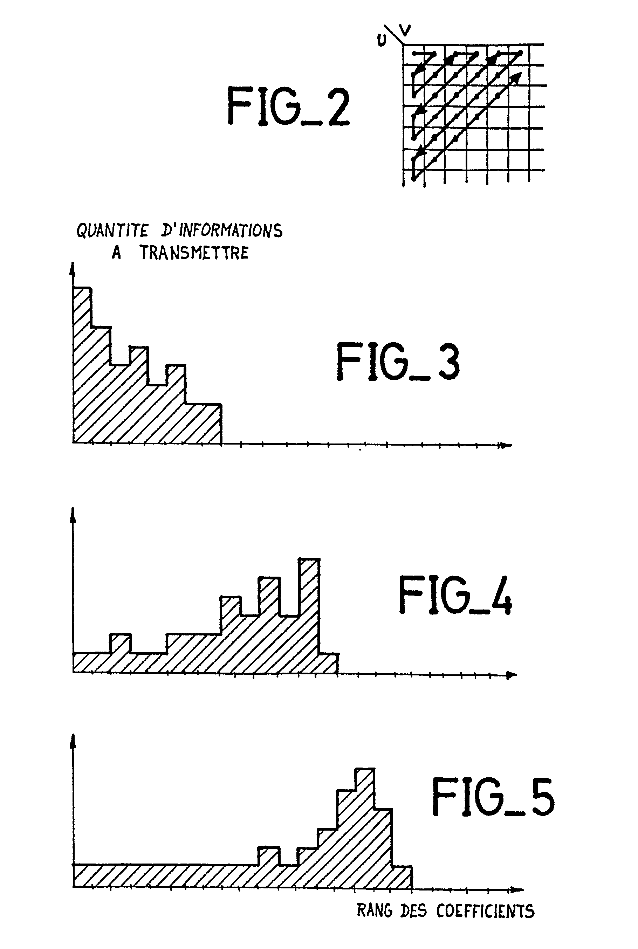

La figure 2 représente le coin supérieur gauche de la matrice des coefficients de transformation d'un bloc et représente le parcours en zigzag définissant l'ordre où les coefficients sont considérés pour ce codage par plages. Cet ordre est aussi l'ordre dans lequel les coefficients $F(u,v)$ sont fournis par la sortie du dispositif 1 de transformation cosinus. Un tel parcours a pour avantage qu'il recontre de longues plages de valeurs nulles ce qui permet de réduire la quantité d'informations à transmettre.

Le premier dispositif 5 de régulation de débit reçoit les valeurs codées par le dispositif 4 avec un débit variable et restitue ces mêmes valeurs codées avec un débit constant sur une ligne de transmission 12. Le dispositif 5 comporte un registre à décalage utilisé comme tampon et comporte des moyens de commande pour surveiller le remplissage du registre et pour déterminer une valeur de normalisation D à fournir au dispositif 3.

Une entrée du second dispositif de régulation de débit 6 est reliée à la ligne de transmission 12 pour recevoir les valeurs codées et les stocker dans un registre à décalage utilisé comme tampon. Une sortie du dispositif 6 est reliée à une entrée du dispositif 7 de décodage. Une sortie du dispositif 7 est reliée à une entrée du dispositif 8 de normalisation inverse. Le dispositif de décodage 7 fournit des valeurs décodées à intervalles irréguliers à cause de la longueur variable des valeurs codées selon un code de Huffman. Le remplissage des registres tampons dans les dispositifs de régulation 5 et 6 est constamment symétrique. Des moyens de commande incorporés dans le dispositif 6 générent une même valeur D qui est fournie à une entrée du dispositif 8 de normalisation inverse. Le dispositif 8 reçoit sur une autre entrée une valeur fournie par le dispositif de décodage 7 et il multiplie cette valeur par D pour restituer une valeur d'un coefficient de transformation.

Une sortie du dispositif 8 est reliée à une entrée du dispositif 9 d'addition de la valeur du seuil et une sortie du dispositif 9 est reliée à une entrée du dispositif 10 de transformation cosinus inverse. Une sortie du dispositif 10 est reliée à une borne de sortie 11 et fournit une suite de valeurs de luminance décodée. Le dispositif 9 ajoute la valeur T du seuil aux valeurs des coefficients qui ont subi la soustraction d'une valeur T par le dispositif 2 au moment du codage. Enfin le dispositif 10 réalise la transformation cosinus inverse qui restitue les valeurs de luminance de chaque point de chaque bloc.

Le procédé selon l'invention diffère du procédé connu par l'utilisation d'un codage inter-images pour les images représentant des scènes faiblement animées ou fixes, tout en conservant un codage intra-image, similaire à celui décrit précédemment, pour les images représentant des scènes fortement animées. L'utilisation d'un codage inter-images pour les images faiblement animées permet d'exploiter la corrélation existant entre deux images successives.

4

Les informations visuelles essentielles d'une image correspondent aux fréquences spatiales les plus basses et celles-ci correspondant aux premiers coefficient de la matrice des coefficients de transformation de cette image lorsque cette matrice est parcourue en zigzag selon le parcours défini à la figure 2. Ces premiers coefficients ont donc en général une grande énergie alors que les coefficients suivants ont une faible énergie. Pour obtenir une image décodée ayant une qualité minimale le codage et le décodage doivent donc transmettre en priorité les premiers coefficients de la matrice des coefficients de transformation.

Lorsqu'une suite d'images représente une scène faiblement animée ou fixe, il est inutile de transmettre les valeurs des premiers coefficients de la matrice pour chaque image puisque ces valeurs varient très peu d'une image à l'autre, par contre il est regretable de ne pas transmettre les valeurs des coefficients suivants qui permettent de reconstituer les détails fins de chaque image, lesquels détails peuvent être perçus tout à loisir par l'oeil justement lorsque la scène est faible animée ou fixe.

Le procédé selon l'invention consiste donc à transmettre les valeurs des coefficients de transformation d'une image lorsque celle-ci représente une scène très animée, en pondérant avec un faible poids les coefficients correspondant aux fréquences spatiales moyennes et hautes; et à transmettre les variations des coefficients de transformation d'une image par rapport à la précédente, lorsque ces images représentent une scène peu animée ou fixe, la réduction de la quantité d'informations ainsi obtenues étant utilisée pour transmettre avec plus de bits les valeurs des coefficients correspondant aux fréquences spatiales moyennes et hautes.

L'animation des scènes représentées par la suite d'images peut être estimée en comparent les valeurs des coefficients de transformation des blocs homologues de chacune des images de la suite. Le procédé selon l'invention consiste à calculer la différence entre les premiers coefficients de transformation de chaque bloc et leurs homologues du bloc homologue dans l'image précédente, et à comparer les valeurs absolues de ces différences par rapport à un seuil, et à passer du codage inter-images au codage intra-image lorsqu'au moins une des différences est supérieure au seuil fixé. Les valeurs de coefficients homologues utilisées pour calculer les différences ne sont pas les valeurs exactes calculées selon les formules théoriques (1) mais celles restituées par un codage puis un décodage, car ce sont ces denières qui sont effectivement disponibles dans le dispositif de décodage.

Les figures 3 à 5 illustrent le procédé selon l'invention, appliqué au codage de trois images successives représentant une scène fixe, les informations codées étant transmises à débit constant. Chacune de ces figures représente un graphe ayant en ordonnée la quantité d'informations effectivement transmise et en abscisse le rang des coefficients de la matrice de transformation de chacune de ces images, ce rang étant déterminée sur le parcours en zigzag représenté à la figure 2. Les figures 3 à 5 considèrent les quantités d'informations effectivement transmises après: un calcul de la différence entre les coefficients de transformation de l'image considérée et les coefficients de transformation de l'image qui la précède; une pondération; une normalisation; et une quantification.

L'image correspondant à la figure 3 étant différente des images qui l'ont éventuellement précédée, les valeurs des coefficients de transformation de cette image sont donc très différentes de celles des coefficients de transformation de l'image qui la précède. La répartition des quantités d'informations transmises est analogue à la répartition des quantités d'informations qui seraient à transmettre par un codage intraimge. C'est pourquoi les quantités d'informations transmises pour les coefficients de faible rang sont élevées et les quantités d'informations pour les coefficients de rang plus élevé décroissent en fonction de ce rang.

Les quantités d'information transmises pour les coefficients de rang très élevé sont nulles car les valeurs des différences de coefficients de transformation subissent en outre une pondération favorisant les coefficients de faible rang par rapport aux coefficients de rang élevé, puis une normalisation commandée par un dispositif de régulation de débit, et enfin une quantification.

La figure 4 correspond à l'image suivante qui est identique par hypothèse à l'image précédente. Les coefficients de transformation de cette dexième image sont donc théoriquement strictement identiques à ceux de l'image précédente. Cependant les opérations de calcul de pondération, de normalisation, et de quantification, provoquent des erreurs de codage qui se traduisent par une différence non nulle entre les coefficients de transformation avant codage et les coefficients de transformation après codage puis décodage. Il y a dont des différences non nulles entre les coefficients codés puis décodés pour la première image et les coefficients qui vont être codés pour la deuxième image.

La figure 4 représente la quantité informations correspondant à ces différences après que ces différences aient subi une pondération, une normalisation, et une quantification. La quantité d'informations constituée par ces différences est faible, le dispositif de régulation commande alors le dispositif de normalisation pour amplifier leurs valeurs. La figure 4 représente donc la quantité d'informations résultant de cette amplification. La quantité d'informations est maximale pour les coefficients de rang moyen, car les erreurs de codage pour la première image sont importantes en ce qui concerne les coefficients de rang moyen et de rang élevé. Le codage des valeurs de différences des coefficients de rang élevé pour la deuxième image est, lui aussi, erroné car les coefficients de rang élevé sont défavorisés par rapport aux coefficients de rang moyen, à cause de l'opération de pondération.

La figure 5, représente la quantité d'information transmises pour une troisième image. Les différences entre les coefficients de la troisième image et les coefficients codés puis décodés de la seconde image sont faibles puisque les coefficients de faible rang puis les coefficients de rang moyen ont été codés précédemment avec une faible erreur de codage. Les valeurs de différences à transmettre pour les coefficients de rang faible et de rang moyen sont donc faibles et nécessitent peu de bits. Le dispositif de régulation de débit modifie alors le paramètre de normalisation pour amplifier encore plus les valeurs des différences de coefficients, qui correspondent alors presque uniquement aux coefficients de rang élevé.

Ainsi la troisième image décodée comportera les informations correspondant aux coefficients de faible rang, aux coefficients de rang moyen, et aux coefficients de rang élevé, c'est-à-fire sera reproduite avec une grande finesse de détails. Ce processus converge pendant la durée de trois ou quatre images successives. Le procédé selon l'invention est décrit ci-dessus dans l'hypothèse d'un débit de transmission constant, mais il peu être applique tout aussi bien dans l'hypothèse d'un débit de transmission variable.

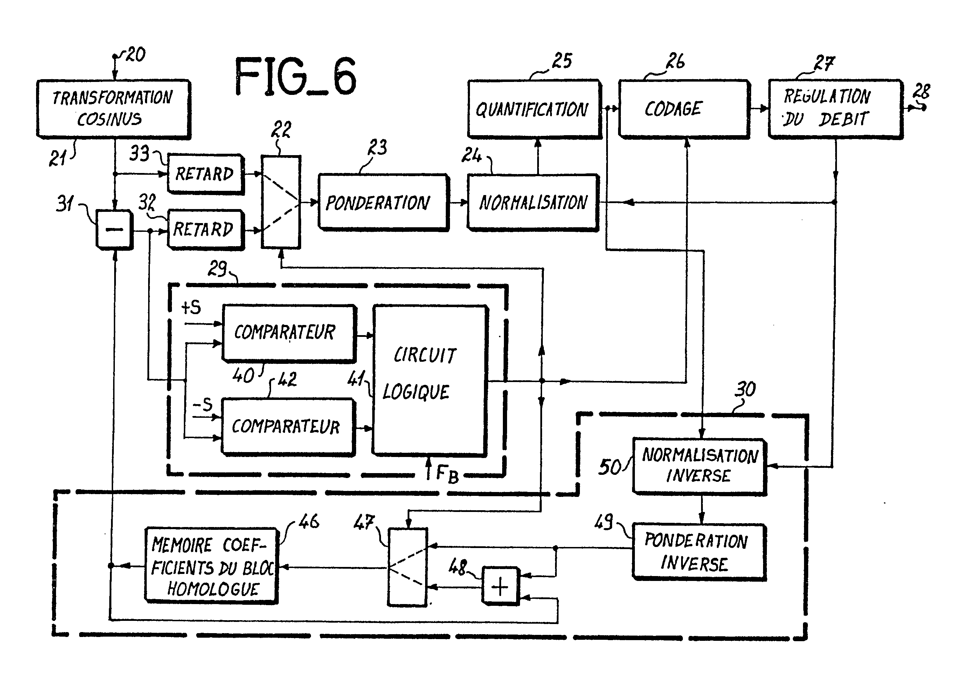

La figure 6 représente le schéma synoptique d'un exemple de réalisation d'un dispositif de codage selon l'invention, destiné à traiter des images de télévision monochrome constituées de deux trames entrelacées. Chaque pair de trames est considérée comme deux images successies. Il comporte: un dispositif de transformation cosinus 21; un soustracteur numérique 31; deux dispositifs à retard 32 et 33; un multiplexeur 22 à deux entrées et une sortie; un dispositif de pondération 23; un dispositif de normalisation 24; un dispositif de quantification 25; un dispositif de codage 26; un dispositif 27 de régulation de débit; des moyens de commande 29; et des moyens 30 de décodage inter-images.

Le dispositif 21 de transformation cosinus possède une entrée reliée à une borne d'entrée 20 du dispositif de codage selon l'invention, pour recevoir une suite de valeurs numériques représentatives des points d'image. Une sortie du dispositif 21 est reliée à une première entrée du soustracteur 31 et à une entrée du dispositif à retard 33. Une sortie des moyens 30 est reliée à la seconde entrée du soustracteur 31 et la sortie de ce dernier est reliée à une entrée du dispositif 32 et à une entrée des moyens 29.

Une entrée et une sortie du dispositif de pondération 23 sont reliées respectivement à une sortie du multiplexeur 22 et à une entrée du dispositif de normalisation 24. Une sortie du dispositif 24 est reliée à une entrée du dispositif 25 de quantification. Une sortie du dispositif 25 est reliée à une entrée du dispositif 26 de codage et à une première entrée de moyens 30. Une sortie du dispositif 26 est reliée à une entrée du dispositif 27 de régulation de débit. Le dispositif 27 possède une première sortie reliée à une borne de sortie 28 du dispositif de codage selon l'invention et une seconde sortie reliée d'une part à une entrée de commande du dispositif 24 de normalisation et à une deuxième entrée des moyens 30. Une sortie des moyens 29 est reliée à une entrée de commande du multiplexeur 22, à une entrée de commande du dispositif 26 de codage, et à une troisième entrée des moyens 30.

Les moyens de commande 29 comportent: deux comparateurs, 40 et 42, et un circuit logique 41. L'entrée des moyens 29 est reliée à une première entrée du comparateur 40 et à une première entrée du comparateur 42. Ces comparateurs possédent chacun une deuxième entrée recevant respectivement une valeur de seuil +S et une valeur de seuil −S. Ils possèdent chacun une sortie reliée respectivement à une entrée du circuit logique 41. Le circuit logique 41 possède une entrée d'horloge recevant un signal $F_B$ à la fréquence de traitement des blocs, et une sortie constituant la sortie des moyens 29.

Les moyens de décodage inter-images 30 comportent: une mémoire 46 de stockage des coefficients de transformation du bloc homologue du bloc en cours de traitement; un multiplexeur à deux entrées et une sortie, 47; un additionneur 48; un dispositif de pondération inverse, 49; et un dispositif de normalisation inverse, 50. La première entrée, la seconde entrée et la troisième entrée des moyens 30 de décodage sont reliées respectivement à une entrée de commande du multiplexeur 47, à une première et à une seconde entrée du dispositif 50. Une sortie du dispositif 50 est reliée à une entrée du dispositif 49. Une sortie de celui-ci est reliée à une première entrée du multiplexeur 47 et à une première entrée de l'additionneur 48.

Une seconde entrée de l'additionneur 48 et une sortie sont reliées respectivement à une sortie de la mémoire 46, qui constitue la sortie des moyens 30, et à une seconde entrée du multiplexeur 47. Une sortie du multiplexeur 47 est reliée à une entrée de données de la mémoire 46. La mémoire 46 peut être constituée d'un registre à décalage commandé par un signal d'horloge à la fréquence d'analyse des points, fréquence qui correspond à la fréquence de traitement de chaque coefficient de transformation. Le nombre d'étage de ce registre est égal au nombre de points par trame d'image, moins dix points pour tenir compte du retard procuré par le dispositif 32.

Le dispositif 21 de transformation cosius réalise le découpage de chaque image en blocs de 16×16 points et calcule, pour chaque bloc, une matrice des coefficients de transformation par la transformation cosinus définié précédemment. Les valeurs des coefficients de chaque bloc sont fournies au dispositif 33 successivement, dans l'ordre défini par la figure 2, et sont appliqués d'une part et, d'autre part, à la première entrée du soustracteur 31 pour calculer la différence de chaque coefficient par rapport au coefficient homologue du bloc homologue dans la trame précédente, les moyens de décodage 30 fournissant la valeur de ce coefficient homologue à la seconde entre du soustracteur 31. Les valeurs de différences fournies par la sortie du soustracteur 31 sont retardées par le dispositif 33 puis appliquées à la seconde entrée du multiplexeur 22. Celui-ci les transmet si le bloc représente une scène peu animée ou fixe. Sinon, il transmet les valeurs de coefficients fournies par le dispositif 33.

Le multiplexeur 22 est commandé par un signal logique fourni par la sortie des moyens de commande 29. L'entrée des moyens 29 reçoit la différence calculée par le soustracteur 31 et la compare d'une part à la valeur de seuil +S et d'autre part à la valeur de seuil −S au moyen des comparateurs 40 et 42. Le seuil +S correspond aux différences positives et le seuil −S correspond aux différences négatives. Quand la valeur

6

absolue de la différence entre deux coefficients homologues est supérieure à la valeur se seuil, le comparateur 40 ou le comparateur 42 fournit un signal logique au signal 41. Celui-ci fournit un signal logique correspondant à un codage intra-image pendant toute la durée de codage d'un bloc si la différence est supérieure au seuil pour au moins l'un des dix premiers coefficients d'un bloc. L'élaboration du choix du type de codage nécessite de considérer les dix premiers coefficients de chaque bloc, c'est pourqoi il est prévu des dispositifs à retard 33 et 32 pour retarder les valeurs fournies par le dispositif 21 et par le soustracteur 31, d'une durée correspondant à dix coefficients, c'est-à-dire correspondant à dix points d'image.

Les dispositifs à retard 33 et 32 peuvent être constitués chacun d'un registre à décalage possèdant dix étages et commandé par un signal d'horloge au rythme de l'analyse des points d'image. Le circuit logique 41 est un circuit séquential dont la réalisation est à la portée de l'homme de l'art. La réalisation du dispositif 21 de transformation cosinus est à la portée de l'homme de l'art car la transformation cosinus est une transformation utilisée très classiquement pour le codage des images.

Le dispositif de pondération 23 applique la même pondération quel que soit le type de codage en cours. Cette pondération consiste à multiplier la valeur appliquée à son entrée par un coefficient égal à:

$$\exp\frac{-(u^2+v^2)}{15^2},$$

u et v étant respectivement l'indice de ligne et l'indice de colonne du coefficient en cours de codage, dans la matrice de transformation. Quand les indices u et v augmentent, le poids appliqué au coefficient diminue. Les coefficients ayant des indices élevés, c'est-à-dire correspondant aux fréquences spatiales élevées, sont donc multipliés par des valeurs proches de zéro. Les valeurs de indices u et v sont déterminées par des moyens de synchronisation et de commande, non représentés, et dont la réalisation est à la portée de l'homme de l'art.

Le dispositif de normalisation 24 multiplie les valeurs qui sont appliquées à son entrée, par un coefficient variable fourni par le dispositif 27 de régulation de débit. Le dispositif de quantification 25 réalise la transformation des valeurs appliquées à son entrée avec une virgule flottante, en des valeurs entières. Le dispositif de codage 26 code par deux codes de Huffman la valeur et l'adresse des coefficients ou des différence de coefficients qui sont appliqués à son entrée. Le codage de l'adresse est un codage par plages, les coefficients étant traités dans l'ordre représenté sur la figure 2. Ce codage permet une forte réduction de la quantité d'information à transmettre en tirant pari du fait qu'un grand nombre de coefficients de rang élevé ont une valeur nulle et qu'ils sont répartis en plages de longueurs importantes. Les dispositif 26 insère dans la suite des informations codées un mot de code indiquant le changement de type de codage, sous l'action du signal logique fourni par la sortie des moyens 29.

Le dispositif 27 de régulation de débit comporte un registre à décalage utilisé comme mémoire tampon et des moyens de commande surveillant le remplissage de ce registre et calculant une valuer de paramètre de normalisation en fonction de ce degré de remplissage, par exemple au moyen d'une table stockée en mémoire morte. Les moyens de décodage 30 permettant de restituer une suite de coefficients de transformation codés puis décodés et stockés pendant une durée correspondant à une trame. Les moyens de décodage 30 sont reliés à la sortie du dispositif 25 de quantification pour prélever une suite de valeurs à décoder.

Cette suite de valeurs est appliquée au dispositif de normalisation inverse 50 qui reçoit la valeur du paramètre de normalisation fourni par le dispositif 37. Le dispositif 50 multiplie la valeur à décoder par l'inverse du paramètre de normalisation, par exemple au moyen d'une table stockée en mémoire morte. Le dispositif 50 fournit une suite de valeurs au dispositif 49 de pondération inverse. Ce dernier multiplie chacune des valeurs par un poids égal à

$$\exp\frac{u^2+v^2}{15^2}$$

Si le codage en cours est un codage intra-image, le multiplexeur 47, commandé par les moyens de commande 29, transmet la suite de valeurs fournie par le dispositif 49 de pondération inverse. Si le bloc en cours de codage subit un codage inter-images, le multiplexeur 47 transmet une suite de valeurs fournie par l'additionneur 48 qui réalise la restitution des valeurs de coefficients en additionnant la valeur du coefficient homologue du bloc homologue dans l'image précédente à la valeur de différence qui est alors fournie par le dispositif 49.

Les valeurs de coefficients décodées fournies par la sortie du multiplexeur 47 sont stockées dans la mémoire 46 pendant une durée équivalente au traitement d'une trame moins dix points. La valeur restituée par la mémoire 46 est utilisée d'une part pour calculer une valeur de différence de coefficient au moyen du soustracteur 31, et pour décoder simultanément cette même valeur de différence de coefficients au moyen de l'additionneur 48.

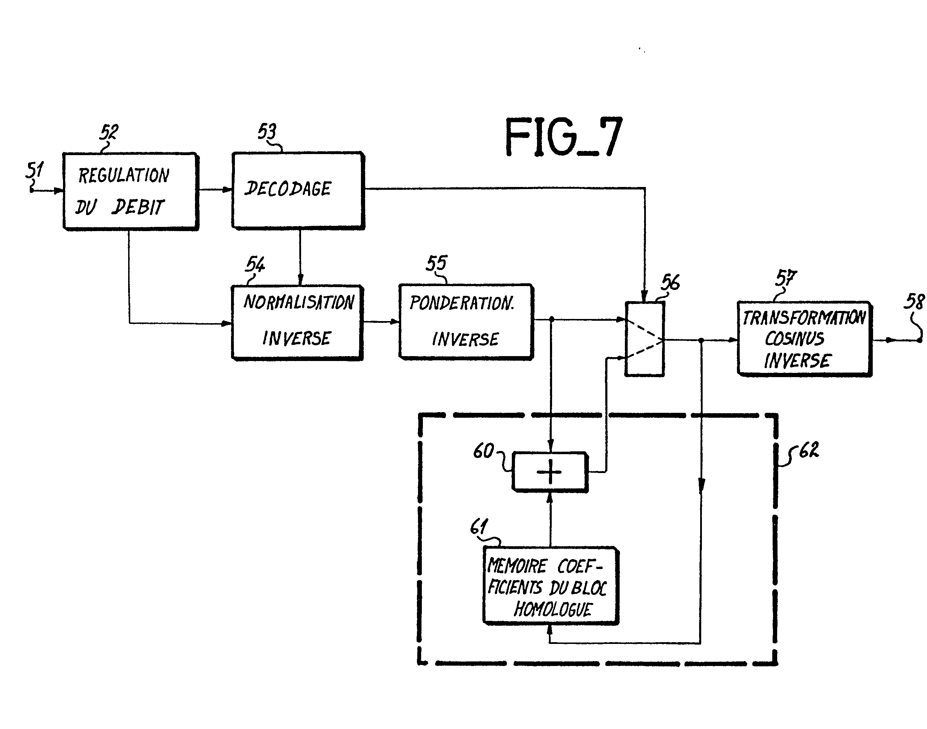

La figure 7 représente le schéma synoptique d'un exemple de réalisation d'un dispositif de décodage selon l'invention permettant de décoder les valeurs codées fournies par le dispositif de codage qui est décrit ci-dessus. Ce dispositif de décodage comporte: un dispositif 52 de régulation de débit; un dispositif 53 de décodage; un dispositif 54 de normalisation inverse; un dispositif 55 de pondération inverse; un multiplexeur 56 à deux entrées et une sortie; un dispositif 57 de transformation cosinus inverse; et un dispositif 62 de décodage inter-images.

Une entrée du dispositif 52 de régulation de débit est reliée à une borne d'entrée 51 recevant des valeurs codées. Le dispositif de régulation 52 possède une première sortie reliée à une entrée du dispositif de décodage 53 et une seconde sortie reliée à une entrée de commande du dispositif de normalisation inverse 54. le dispositif de décodage 53 possède une sortie reliée à une entrée du dispositif 54. Une sortie du dispositif de normalisation inverse 54 est reliée à une entrée du dispositif 55 de pondération inverse. Ce dernier possède une sortie reliée à une première entrée du multiplexeur 56 et à une première entrée des moyens 62. Les moyens 62 possèdent une sortie reliée à une seconde entrée du multiplexeur 56. Le multiplexeur 56 possède une sortie reliée à une seconde entrée des moyens 62 et à une entrée du dispositif 57. Une sortie du dispositif 57 est reliée à une borne de sortie 58 du dispositif de décodage selon l'invention.

Les moyens de décodage inter-images 62 comportent une mémoire 61 de stockage des coefficients du bloc homologue, dans l'image précédente, du bloc en cours de décodage. La première entrée des moyens 62 est reliée à une première entrée de l'additionneur 60. La seconde entrée des moyens 62 est reliée à une entrée de données de la mémoire 61. Une sortie de celle-ci est reliée à une seconde entrée de l'additionneur 60. Une sortie de l'additionneur 60 est reliée à la sortie des moyens 62.

Le régulateur de débit 52 reçoit par la borne d'entrée 51 une suite de valeurs binaires ayant un rythme constant mais transmettant des valeurs de coefficients codées à un rythme variable. Le dispositif de décodage 53 doit restituer des coefficients, ou des différences de coefficient, à un rythme constant correspondant au rythme d'analyse et de restitution d'une trame. Le dispositif de régulation 52 comporte donc une mémoire tampon constituée d'un registre à décalage où sont inscrites à une rythme constant les valeurs binaires récues par la borne d'entrée 51. Ces valeures binaires sont décodées à un rythme variable par le dispositif de décodage 53 selon les tables des codes de Huffman utilisées pour le codage, en recalculant les adresses qui ont été codées par plages. Le remplissage de la mémoire tampon du dispositif 52 est rigoureusement symétrique du remplissage de la mémoire tampon située dans le dispositif 27 de régulation de débit pour le codage.

Le dispositif 52 comporte des moyens de commande qui surveillant ce remplissage et déterminent le même paramètre de normalisation que dans le dispositif de codage. Ce paramètre de normalisation est appliqué au dispositif 54 de normalisation inverse qui réalise la multiplication de chaque valeur appliquée à son entrée par la valeur inverse du paramètre de normalisation. Le dispositif 54 peut être identique au dispositif 50 et être constitué par une mémoire morte stockant une table de valeurs. Le dispositif de pondération inverse multiplie chacune des valeurs appliquées successivement à son entrée par un poids égal à

$$\exp\frac{u^2+v^2}{15^2}.$$

Les valeurs des indices u et v sont déterminées par des moyens de synchronisation et de commande, non représentés et dont la réalisation est à la portée de l'homme de l'art.

Le multiplexeur 56 reçoit sur la première entrée les valeurs fournies directement par la sortie du dispositif 55 et il reçoit sur sa seconde entrée une valeur décodée par les moyens 62. les moyens 62 décodent les valeurs de différence de coefficients, en additionnant au moyen de l'additionner 60 la valeur du coefficient homologue du bloc homologue dans l'image précédente.

Le dispositif de décodage 53 détecte les mots binaires insérés dans la suite des informations codées pour indiquer les changements de type de codage et fournit un signal de commande au multiplexeur 56. Celui-ci transmet la valeur fournie par la sortie du dispositif 55 lorsque le codage est intra-image et transmet la valeur fournie par la sortie des moyens 62 lorsque le codage est inter-images. La sortie du multiplexeur 56 fournit donc une suite de valeurs décodée de coefficients au dispositif 57 de transformation cosinus inverse. Celui-ci restitue une suite de valeurs de luminance dans l'ordre où elles ont été analysées.

L'invention ne se limite pas aux exemples de réalisation décrit ci-dessus, de nombreuses variantes sont à la portée de l'homme de l'art, notamment pour réaliser les moyens de commande 29 détectant le degré d'animation de chaque bloc, et pour choisir le type de transformation.

Le codage et le décodage des images de télevision en couleur peuvent être réalisés en traitant en parallèle trois suites de valeurs numériques correspondant à un signal de luminance et deux signaux de différence de couleur.

L'invention peut être appliquée notamment à la transmission ou au stockage à débit réduit des images de télévision.

# EP 0 189 703 B1

**Revendications**

1. Procédé adaptif de codage et de décodage d'une suite d'images par transformation, chaque point d'image étant représenté par une valeur numérique, le codage consistant à diviser chaque image en blocs de points et à appliquer une transformation bi-dimensionelle à chaque bloc pour obtenir une matrice de valeurs appelées coefficientes de transformation du bloc; et consistant, pour chaque bloc de points à:

discriminer si le bloc représente une scène très animée ou peu animée;

transmettre la valeur des coefficients de transformation du bloc dans le premier cas, ou la différence de valeur de ces coefficients, par rapport à la valeur des coefficients homologues du bloc homologue dans l'image précédente, dans le second cas;

transmettre des informations indiquant si le bloc représente une scène peu animée ou très animée;

le décodage consistant à appliquer aux valeurs transmises correspondant à un bloc, une transformation inverse de la transformation appliquée pour son codage si ce bloc représente une scène très animée;

et consistant en outre, si le bloc représente une scène peu animée, à déterminer une valeur des coefficients de ce bloc, en additionnant la différence de valeur de chacun de ses coefficients respectivement à la valeur des coefficients homologues du bloc homologue dans l'image précédente, avant d'appliquer la transformation inverse;

caractérisé en ce que le codage consiste en outre à appliquer une pondération aux valeurs des coefficients et des différences de coefficients, avant de les transmettre, avec un poids plus grand pour les coefficients et les différences de coefficients correspondant aux basses fréquences spatiales de l'image, par rapport à ceux et celles correspondant aux hautes fréquences spatiales,

em en ce que le décodage consiste en outre à appliquer une pondération inverse de celle du codage aux valeurs des coefficients et des différences avant de leur appliquer la transformation inverse.

2. Procédé selon la revendication 1, caractérisé en ce que, pour discriminer si le bloc représente une scène très animée ou peu animée, il consiste à: calculer la différence entre chaque coefficient de transformation de ce bloc et le coefficient homologue du bloc homologue dans l'image précédente; à comparer la valeur absolue de cette différence par rapport à une seuil; puis à conclure que le bloc représente une scène très animée, ou peu animée, en fonction du résultant de cette comparaison pour les coefficients correspondant aux basses fréquences spatiales.

3. Procédé selon la revendication 1, caractérisé en ce que, pour réguler le débit des données fournies par le codage, il consiste en outre à multiplier par un paramètre variable, dit de normalisation, les valeurs des coefficients ou des différences de coefficient, après les avoir pondérées et avant de les transmettre;

et en ce que le décodage consiste en outre à multiplier par un paramètre variable dit de normalisation inverse, fonction de la quantité de données transmise, les valeurs des coefficients ou des différences de coefficient qui ont été transmises.

4. Dispositif de codage pour la mise en oeuvre du procédé selon la revendication 1, comportant:

un dispositif de transformation (21) recevant une suite de valeurs numériques représentatives des points d'une image et restituant une suite de coefficients de transformation correspondant à une suite de blocs de points;

des premier moyens (30) pour fournir une suite de coefficients de transformation correspondant au bloc homologue du bloc en cours de codage, dans l'image précédente;

des seconds moyens (29 et 31) couplés au dispositif de transformation (21) pour discriminer les blocs représentant une scène très animée et les blocs représentant une scène peu animée;

un soustracteur (31) couplé au dispositif de transformation et aux premiers moyens (30) pour calculer une suite de différences entre les coefficients de transformation de chaque bloc et les coefficients de transformation homologue du bloc homologue dans l'image précédente;

un multiplexeur (22) pour sélectionner la suite des coefficients fournis par le dispositif de transformation (21) ou la suite des différences fournies par le soustracteur (31), commandé par les seconds moyens (29, 31);

caractérisé en ce qu'il comporte en outre un dispositif de pondération (23) ayant une entrée couplée à la sortie du multiplexeur (22), pour diminuer les valeurs de la suite sélectionnée par le multiplexeur (22) lorsqu'elles correspondent à des coefficients ou des différences de coefficients de rang élevé dans les lignes et les colonnes de la matrice des coefficients de transformation d'un bloc, puis les transmettre à une borne de sortie (28) du dispositif de codage.

5. Dispositif selon la revendication 4, pour la mise en oeuvre du procédé selon la revendication 2, caractérisé en ce que les seconds moyens (29 et 31) comportent:

le sus-dit soustracteur (31);

deux comparateurs (40, 42) reliées à une sortie du soustracteur (31) et ayant respectivement deux valeurs de seuil de signe opposé;

un circuit logique (41) relié à une sortie de chacun des comparateurs (40, 42) et fournissant un signal indiquant pour chaque bloc s'il représente une scène très animée ou peu animée, en fonction de signaux fournis par les deux comparateurs (40, 42) pour les coefficients de ce bloc.

6. Dispositif selon la revendication 4, pour la mise en oeuvre du procédé selon la revendication 3, caractérisé en ce qu'il comporte en outre, en série à la sortie du dispositif de pondération (23):

9

un dispositif de normalisation (24) pour augmenter ou réduire les valeurs des coefficients et des différences de coefficient, en les multipliant par la valeur d'un paramètre de normalisation;

un dispositif de quantification (25) pour supprimer la partie décimale des valeurs de coefficients ou de différences de coefficients;

un dispositif de codage (26) pour coder par des codes de Huffman les valeurs et les adresses des coefficients et des différences de coefficients avant de les transmettre, et pour générer un mot de code indiquant si un bloc représente une scène très animée ou peu animée;

un dispositif (27) de régulation du débit de transmission, fournissant la valeur du paramètre de normalisation au dispositif de normalisation (24).

7. Dispositif de décodage pour la mise en oeuvre du procédé selon la revendication 1, comportant:

des premiers moyens (52 à 55) pour recevoir un mot de code et des données codées codant les valeurs représentatives des points d'un bloc de points d'une image, et pour restituer une suite de valeurs constituée de coefficients de transformation ou de différences de coefficients de transformation des valeurs de luminance, selon la valeur du mot de code, et pour restituer un signal de commande fonction de la valeur du mot de code;

des seconds moyens (62) pour déterminer une valeur pour chaque coefficient d'un bloc en additionnant une valeur d'une différence de coefficients fournie par les premiers moyens (53) à la valeur du coefficient correspondant dans le bloc homologue de l'image précédente;

un multiplexeur (56), commandé par le signal généré par les premiers moyens (53), pour transmettre vers une borne de sortie (58) du dispositif de décodage soit les valeurs restituées par les premiers moyens (53), soit les valeurs déterminées par les seconds moyens (62);

un dispositif (57) de transformation inverse de celle appliquée pour le codage, couplé à la sortie du multiplexeur (56), pour restituer une suite de valeurs numériques représentatives des points d'image;

caractérisé en ce que les premiers moyens (52 à 55) comportent un dispositif de pondération inverse (55) pour appliquer aux valeurs des coefficients de transformation et des différences de coefficients de transformation, une pondération inverse de celle appliquée au cours du codage.

8. Dispositif de décodage selon la revendication 6, caractérisé en ce que les premiers moyens (52 à 55) comportent en série:

un dispositif (52) de régulation de débit pour recevoir des données codées avec un débit binaire constant, et pour déterminer la valeur d'un paramètre de normalisation;

un dispositif de décodage (53) pour décoder les données codées reçues par le dispositif de régulation et fournir à un rythme constant une suite de coefficients de transformation, ou de différence de coefficients, et pour décoder un mot de code indiquant si le bloc correspondant à ces données représente une scène très animée ou peu animée et générer un signal logique correspondant;

un dispositif de normalisation (54) couplé à une sortie du dispositif de décodage (53), pour multiplier par la valeur du paramètre du normalisation les coefficients et les différences de coefficients de transformation fournis par le dispositif de décodage (53).

## Patentansprüche

1. Adaptives Kodier- und Dekodierverfahren für eine Bildfolge aufgrund einer Transformation, wobei jeder Bildpunkt durch einen Zahlenwert dargestellt wird und die Kodierung darin besteht, jedes Bild in Blöcke von Bildpunkten aufzuteilen und jeden Block einer zweidimensionalen Transformation oder unter werfen, so daß sich eine Matrix von Werten ergibt, die Transformationskoeffizienten des Blocks genannt werden und wobei das Verfahren für jeden Block von Punkten darin besteht

zu unterscheiden, ob der Block eine sehr bewegte oder wenig bewegte Szene darstellt,

im ersteren Fall den Wert der Transformationskoeffizienten des Blocks und im zweiten Fall die Wertedifferenz dieser Koeffizienten bezüglich des Werts der homologen Koeffizienten des homologen Blocks im vorhergehenden Bild zu übertragen,

Informationen zu übertragen, die angeben, ob der Block eine wenig bewegte oder sehr bewegte Szene darstellt,

während der Dekodierung darin besteht, die einem Block entsprechenden übertragenen Werte einer Transformation zu unterwerfen, die der bei der Kodierung verwendeten Transformation invers ist, sofern der Block eine sehr bewegte Szene darstellt, wogegen für eine wenig bewegte Szene ein Wert der Koeffizienten dieses Blocks bestimmt wird, indem die jeweilige Wertedifferenz jedes seiner Koeffizienten zum Wert der homologen Koeffizienten des homologen Blocks im vorhergehenden Bild vor der Anwendung der inversen Transformation addiert wird,

dadurch gekennzeichnet, daß die Kodierung weiter darin besteht, daß die Werte der Koeffizienten und der Koeffizientendifferenzen vor der Übertragung mit einer höheren Gewichtung für die Koeffizienten und Koeffizientendifferenzen entsprechend den niedrigen räumlichen Bildfrequenzen übertragen werden als die entsprechend den hohen räumlichen Frequenzen, und daß die Dekodierung weiter darin besteht, die Werte der Koeffizienten und der Differenzen vor der Anwendung der inversen Transformation einer Gewichtung zu unterwerfen, die invers zu der bei der Kodierung angewendeten ist.

2. Verfahren nach Anspruch 1, dadurch gekennzeichnet, daß für die Unterscheidung zwischen einem Block, der eine sehr bewegte Szene darstellt und einem solchen, der eine wenig bewegte Szene darstellt,

die Differenz zwischen jedem Transformationskoeffizienten dieses Blocks und dem homologen Koeffizienten des homologen Blocks im vorhergehenden Bild berechnet wird,

der Absolutwert dieser Differenz mit einer Schwelle verglichen wird,

dann in Abhängigkeit vom Ergebnis dieses Vergleichs für die den niederen räumlichen Frequenzen entsprechenden Koeffizienten entschieden wird, ob der Block eine sehr bewegte oder eine wenig bewegte Szene darstellt.

3. Verfahren nach Anspruch 1, dadurch gekennzeichnet, daß zur Einstellung des von der Kodierung gelieferten Datendurchsatzes außerdem die Werte der Koeffizienten oder der Koeffizientendifferenzen nach der Gewichtung und vor ihrer Übertragung mit einem variablen Parameter, Normalisierungsparameter genannte, multipliziert werden,

und daß bei der Dekodierung außerdem die Werte der Koeffizienten oder der Koeffizientendifferenzen, die übertragen worden sind, mit einem variablen Parameter, inverser Normalisierungsparameter genannt, multipliziert werden, der von der Menge der übertragenen Daten abhängt.

4. Kodiervorrichtung für die Durchführung des Verfahrens nach Anspruch 1,

mit einer Transformationseinrichtung (21), die eine Folge von für die Punkte eines Bildes repräsentativen Zahlenwerten empfängt und eine Folge von Transformationskoeffizienten entsprechend einer Folge von Punktblöcken liefert,

mit ersten Mitteln (30), die eine Folge von Transformationskoeffizienten entsprechend dem homologen Block im vorhergehenden Bild zu dem gerade kodierten Block liefern,

mit zweiten Mitteln (29 und 31), die mit der Transformationseinrichtung (21) gekoppelt sind, um die eine sehr bewegte Szene darstellenden Blöcke von den eine wenig bewegte Szene darstellenden Blöcken zu unterscheiden,

mit einem Subtrahierglied (31), das mit der Transformationseinrichtung und den ersten Mitteln (30) gekoppelt ist, um eine Folge von Differenzen zwischen den Transformationskoeffizienten jedes Blocks und den homologen Transformationskoeffizienten des homologen Blocks im vorhergehenden Bild zu berechnen,

mit einem Multiplexer (22), um die Folge der von der Transformationseinrichtung (21) gelieferten Koeffizienten oder die Folge der vom Subtrahierglied (31) gelieferten Differenzwerte unter Steuerung durch die zweiten Mittel (29, 31) auszuwählen, dadurch gekennzeichnet, daß außerdem eine Gewichtungseinrichtung (23) mit einem an den Ausgang des Multiplexers (22) gekoppelten Eingang vorgesehen ist, um die Werte der vom Multiplexer (22) ausgewählten Folge zu verkleinern, wenn sie den Koeffizienten oder Koeffizientendifferenzen hohen Rangs in den Zeilen der Transformationskoeffizientenmatrix eines Blocks entsprechen, worauf die verkleinerten Werte an eine Ausgangsklemme (28) der Kodiervorrichtung gelangen.

5. Vorrichtung nach Anspruch 4, zur Durchführung des Verfahrens nach Anspruch 2, dadurch gekennzeichnet, daß die zweiten Mittel (29 und 31)

das oben erwähnte Subtrahierglied (31),

zwei an den Ausgang des Subtrahierglieds (31) angeschlossene Komparatoren (40, 42) mit zwei Schwellwerten unterschiedlichen Vorzeichens,

und einen Logikkreis (41) aufweisen, der an den Ausgang jedes der Komparatoren (40, 42) angeschlossen ist und ein Signal liefert, das für jeden Block angibt, ob er eine sehr bewegte Szene oder eine wenig bewegte Szene darstellt, und zwar abhängig von Signalen, die von den beiden Komparatoren (40, 42) für die Koeffizienten dieses Blocks geliefert werden.

6. Vorrichtung nach Anspruch 4, zur Durchführung des Verfahrens nach Anspruch 3, dadurch gekennzeichnet, daß sie außerdem in Reihe mit dem Ausgang der Gewichtungseinrichtung (23) aufweist:

eine Normalisierungseinrichtung (24), um die Werte der Koeffizienten und der Koeffizientendifferenzen zu vergrößern oder zu verkleinern, indem sie mit dem Wert eines Normalisierungsparameters multipliziert werden,

eine Quantifiziereinrichtung (25), um den Dezimalteil der Werte von Koeffizienten oder Koeffizientendifferenzen zu unterdrücken,

eine Kodiereinrichtung (26), um die Werte und Adressen der Koeffizienten und Koeffizientendifferenzen vor der Übertragung gemäß dem Huffman-Kode zu kodieren und um eine Kodewort zu erzeugen, das angibt, ob der Block eine sehr bewegte oder eine wenig bewegte Szene darstellt,

eine Einrichtung (27) zur Regulierung des Übertragungsdurchsatzes, die den Normalisierungsparameterwert an die Normalisierungseinrichtung (24) liefert.

7. Dekodiervorrichtung zur Durchführung des Verfahrens nach Anspruch 1,

mit ersten Mitteln (52 bis 55), um eine Kodewort und kodierte Daten zu empfangen, die die für die Punkte eines Blocks von Bildpunkten repräsentativen Werte kodieren, und um eine Folge von Werte auszugeben, die von Transformationskoeffizienten oder Transformationskoeffizientendifferenzen der Helligkeitswerte gemäß dem Wert des Kodeworts gebildet wird, und um ein Steuersignal auszugeben, das vom Wert des Kodeworts anhängt,

mit zweiten Mitteln (62), um einen Wert für jeden Koeffizienten eines Blocks zu bestimmen, indem ein Wert einer Koeffizientendifferenz, die von den ersten Mitteln (53) geliefert werden, zum Wert des entsprechenden Koeffizienten im homologen Block des vorhergehenden Bilds hinzuaddiert wird,

mit einem Multiplexer (56), der vom in den ersten Mitteln (53) erzeugten Signal gesteuert wird, um an eine Ausgangsklemme (58) der Dekodiervorrichtung entweder die von den ersten Mitteln (53) gelieferten Werte oder die von den zweiten Mitteln (62) bestimmten Werte zu übertragen,

mit einer Transformationseinrichtung (57), die der bei der Kodierung verwendeten invers ist und an den Ausgang des Multiplexers (56) dekoppelt ist, um eine Folge von für die Bildpunkte repräsentativen Zahlenwerten auszugeben,

dadurch gekennzeichnet, daß die ersten Mittel (52 bis 55) eine inverse Gewichtungseinrichtung (55) enthalten, um die Werte der Transformationskoeffizienten und Transformationskoeffizientendifferenzen einer inversen Gewichtung zu der während der Kodierung verwendeten zu unterwerfen.

8. Dekodiervorrichtung nach Anspruch 6, dadurch gekennzeichnet, daß die ersten Mittel (52 bis 55) in Reihe aufweisen:

eine Einrichtung (52) zur Einstellung des Durchsatzes, die kodierte Daten mit einem konstanten Binärdurchsatz empfangen und den Wert eines Normalisierparameters bestimmen,

eine Dekodiereinrichtung (53), um die von der Einstelleinrichtung empfangenen kodierten Daten zu dekodieren und mit konstantem Rhythmus eine Folge von Transformationskoeffizienten oder Koeffizientendifferenzen zu liefern und ein Kodewort zu dekodieren, das angibt, ob der diesen Daten entsprechende Block eine sehr bewegte oder eine wenig bewegte Szene darstellt, und um ein entsprechendes logisches Signal zu erzeugen,

eine Normalisierungseinrichtung (54), die an einen Ausgang der Dekodiereinrichtung (53) dekoppelt ist, um die von der Dekodiereinrichtung (53) gelieferten Transformationskoeffizienten und Transformationskoeffizientendifferenzen mit dem Wert des Normalisierungsparameters zu multiplizieren.

**Claims**

1. An adaptive method for transform encoding and decoding of a picture sequence, wherein each picture spot is represented by a digital value and the encoding consists in subdividing each picture into blocks of spots and in applying a bi-dimensional transform to each block in order to obtain a matrix of values referred to as block transform coefficients, the method consisting for each block of spots

in discriminating between a scene of high animation and a scene of low animation,

in transmitting the values of the block transform coefficients in the first case, or the value difference of these coefficients with respect to the value of homologous coefficients of the homologous block in the preceding picture in the second case,

in transmitting informations which indicate whether the block represents a scene of low or one of high animation,

and wherein the decoding consists in applying to the transmitted values corresponding to one block an inverse transform to the transform applied during encoding, if this block represents a scene of high animation,

and further consists in determining, prior to applying the inverse transform, a value of the coefficients of this block, if the latter represents a scene of low animation, by adding the value difference of each of its coefficients respectively to the value of the homologous coefficients of the homologous block in the preceding picture,

characterized in that the encoding further consists in applying, prior to their transmission, a ponderation to the values of the coefficientes and of the coefficient differences with a ponderation factor which is larger for the coefficients and coefficient differences corresponding to the low spatial picture frequencies than for those corresponding to the high spatial frequencies,

and that the decoding further consists in applying an inverse ponderation to that applied during encoding to the values of the coefficients and differences prior to being submitted to the inverse transform.

2. A method according to Claim 1, characterized in that in view of the discrimination between a block representing a scene of high animation and one of low animation the method consists in calculating the difference between each transform coefficient of this block and the homologous coefficient of the homologous block in the preceding picture, in comparing the absolute value of this difference to a threshold, then in deciding whether the block representes a scene of high or of low animation in accordance with the result of this comparison for the coefficients corresponding to the low spatial frequencies.

3. A method according to Claim 1, characterized in that in view of an adjustment of the data flow rate supplied by the encoding, the method further consists in multiplying, after ponderation and before transmission of the values of the coefficients or coefficient differences, these values by a variable parameter referred to as normalisation parameter, and that the decoding further consists in multiplying the values of the coefficients or coefficient differences which have been transmitted by a variable parameter referred to as inverse normalisation parameter which depends on the quantity of transmitted data.

4. An encoding device for implementing the method according to Claim 1, comprising

a transform device (21) receiving a sequence of digital values representing the spots of a picture, and delivering a sequence of transform coefficients corresponding to a sequence of blocks of spots,

first means (30) for supplying a sequence of transform coefficients corresponding to the homologous block in the preceding picture with respect to the block which is being encoded,

second means (29 and 31), coupled to the transform device (21) intended to discriminate the blocks representing a scene of high animation from those representing a scene of low animation,

a subtractor (31) coupled to the transform device and to the first means (30) intended to calculate a sequence of differences between the transform coefficients of each block and the homologous transform coefficients of the homologous block in the preceding picture,

a multiplexer (22) intended to select the sequence of coefficients supplied by the transform device (21) or the sequence of differences supplied by the subtractor (31), this multiplexer being controlled by the second means (29, 31),

characterized in that it further comprises a ponderation device (23) whose input iu coupled to the output of the multiplexer (22) in order to decrease the values of the sequence selected by the multiplexer (22) in case these values correspond to coefficients or coefficient differences of high order in the lines and columns of the matrix of transform coefficients of a block, and then to transmit these decreased values to an output (28) of the encoding device.

5. A device according to Claim 4, for implementing the method according to Claim 2, characterized in that the second means (29 and 31) comprise

said subtractor (31),

two comparators (40, 42) connected to the output of the subtractor (31) and implementing respectively two threshold values of opposite sign,

a logic circuit (41) connected to the output of the comparators (40, 42) and supplying a signal which indicates for each block if it represents a scene of high or one of low animation in accordance with signals supplied by said comparators (40, 42) for the coefficients of this block.

6. A device according to claim 4 for implementing the method according to Claim 3, characterized in that it further comprises in series with the output of the ponderation device (23).

a normalisation device (24) intended to increase or decrease the values of the coefficients and coefficient differences by multiplying them with the value of a normalisation parameter,

a quantifier (25) intended to delete the decimal part of the values of coefficients or coefficient differences,

an encoding device (26) intended to encode by Huffman codes the values and the addresses of the coefficients and of the coefficient differences prior to their transmission, and to generate a code word which indicates if a block represents a scene of high or of low animation,

a device (27) for adjusting the transmission flow rate, this device supplying the value of the normalisation parameter to the normalisation device (24).

7. A decoding device for implementing the method according to Claim 1, comprising

first means (52 to 55) for receiving a code word and coded data which encode the values representing the spots of a block of spots in a picture, and to restore a sequence of values constituted by transform coefficients or transform coefficient differences of the brightness values, in accordance with the value of the code word, and to restore a control signal in accordance with the code word value,

second means (62) for determining a value for each coefficient of a block by adding a value of a coefficient difference supplied by the first means (53) to the value of the corresponding coefficient in the homologous block of the preceding picture,

a multiplexer (56) controlled by the signal generated by the first means (53) in order to transmit to an output (58) of the decoding device either the values restored by the first maens (53) or the values defined by the second means (62),

a transform device (57) which transform is inverse to that applied during encoding, this device being coupled to the output of the multiplexer (56) in order to restore a sequence of digital values representing the picture spots, characterized in that the first means (52 to 55) comprise an inverse ponderation device (55) intended to apply to the values of the transform coefficients or transform coefficient differences an inverse ponderation with respect to that applied during the encoding.

8. A decoding device according to Claim 6, characterized in that the first means (52 to 55) comprise in series

a data flow rate adjusting device (52) intended to receive encoded data at a constant binary flow rate and to determine the value of a normalisation parameter,

a decoding device (53) intended to decode the encoded data received by the adjusting device and to supply at a constant flow rate a sequence of transform coefficients or of coefficient differences, and to decode a code word which indicates whether the block corresponding to thesde data represents a scene of high or of low animation, and to generate a corresponding logic signal,

a normalisation device (54) coupled to an output of the decoding device (53) intended to multiply the transform coefficients and coefficient differences supplied by the decoding device (53) by the value of the normalisation parameter.

# FIG_1

FIG_2

QUANTITE D'INFORMATIONS
A TRANSMETTRE

FIG_3

FIG_4

FIG_5

RANG DES COEFFICIENTS

# FIG_6

TRANSFORMATION COSINUS — 20, 21

RETARD — 33

RETARD — 32

— — 31

22

PONDERATION — 23

NORMALISATION — 24

QUANTIFICATION — 25

CODAGE — 26

REGULATION DU DEBIT — 27

28

29

+S

COMPARATEUR — 40

−S

COMPARATEUR — 42

CIRCUIT LOGIQUE — 41

$F_B$

30

NORMALISATION INVERSE — 50

MEMOIRE COEF-FICIENTS DU BLOC HOMOLOGUE — 46

47

48 — +

PONDERATION INVERSE — 49

EP 0 189 703 B1

3

# FIG_7

51 → 52 REGULATION DU DEBIT

52 REGULATION DU DEBIT → 53 DECODAGE

53 DECODAGE → 54 NORMALISATION INVERSE

54 NORMALISATION INVERSE → 55 PONDERATION. INVERSE

55 PONDERATION. INVERSE → 56

56 → 57 TRANSFORMATION COSINUS INVERSE → 58

60 (+) → 56

61 MEMOIRE COEF-FICIENTS DU BLOC HOMOLOGUE

62